Europäisches Patentamt

European Patent Office

Office européen des brevets

(11) Veröffentlichungsnummer: **0 140 106**
**A2**

## (12) EUROPÄISCHE PATENTANMELDUNG

(21) Anmeldenummer: **84110978.8**

(22) Anmeldetag: **14.09.84**

(51) Int. Cl.⁴: **F 16 K 1/30**
**B 67 D 1/14**

(30) Priorität: **17.09.83 DE 3333669**

(43) Veröffentlichungstag der Anmeldung:
**08.05.85 Patentblatt 85/19**

(84) Benannte Vertragsstaaten:
**AT BE FR GB IT NL SE**

(71) Anmelder: **Ninnelt GmbH und Co. KG**
**Withauweg 9**
**D-7000 Stuttgart 40(DE)**

(72) Erfinder: **Dolderer, Wolfgang**
**Fichtenweg 12**
**D-7251 Mönsheim(DE)**

(72) Erfinder: **Sonntag, Günter**
**Am Stadtpark 50**
**D-7000 Stuttgart 40(DE)**

(74) Vertreter: **Hoeger, Stellrecht & Partner**
**Uhlandstrasse 14c**
**D-7000 Stuttgart 1(DE)**

(54) **Entnahmeventil zur Entnahme verflüssigter Treibgase aus einem Vorratsbehälter.**

(57) Die Erfindung bezieht sich auf ein Entnahmeventil zur Entnahme verflüssigter Treibgase aus einem Vorratsbehälter mit einem Ventilgehäuse, einer an diesem Gehäuse vorgesehenen Entnahmeöffnung, einer im Ventilgehäuse ausgebildeten, vom Vorratsbehälter zur Entnahmeöffnung führenden Entnahmeleitung, einem ersten beweglichen Ventilglied zum Öffnen und Verschließen der Entnahmeleitung und mit einem ebenfalls im Ventilgehäuse angeordneten Sicherheitsventil, welches bei Überschreiten einer bestimmten Entnahmegeschwindigkeit des Treibgases die Entnahmeleitung automatisch zumindest teilweise versperrt. Um eine rasche Entleerung des Vorratsbehälters unter Umgehung des Sicherheitsventils zu ermöglichen, ist vorgesehen, daß am Ventilgehäuse zusätzlich ein Entleerungsstutzen angeordnet ist, der normalerweise durch ein zweites, bewegliches Ventilglied verschlossen ist, und daß das zweite Ventilglied am Sicherheitsventil angreifende Betätigungsmittel aufweist, die beim Bewegen des zweiten Ventilgliedes in seine Offenstellung das Sicherheitsventil außer Tätigkeit setzen, so daß Treibgas mit hoher Entnahmegeschwindigkeit aus dem Entleerungsstutzen austreten kann.

Fig. 1

EP 0 140 106 A2

- 1 -

Anmelder: Ninnelt GmbH und Co. KG
Withauweg 9
7000 Stuttgart 40

**B e s c h r e i b u n g :**

Entnahmeventil zur Entnahme verflüssigter
Treibgase aus einem Vorratsbehälter

Die Erfindung betrifft ein Entnahmeventil zur Entnahme
verflüssigter Treibgase aus einem Vorratsbehälter mit
einem Ventilgehäuse, einer an diesem Gehäuse vorgesehenen Entnahmeöffnung, einer im Ventilgehäuse ausgebildeten, vom Vorratsbehälter zur Entnahmeöffnung
führenden Entnahmeleitung, einem beweglichen Ventilglied zum Öffnen und Verschließen der Entnahmeleitung
und mit einem ebenfalls im Ventilgehäuse angeordneten
Sicherheitsventil, welches bei Überschreiten einer
bestimmten Entnahmegeschwindigkeit des Treibgases aus
der Entnahmeöffnung die Entnahmeleitung automatisch
zumindest teilweise versperrt.

Bekannte Entnahmeventile dieser Art werden vorzugsweise in Fahrzeugen eingesetzt, die mit Propan oder
anderen "Flüssiggasen" betrieben werden. Ein Charakteristikum dieser Ventile ist ein eingebautes Sicherheitsventil, welches nur die Entnahme geringer Mengen
(z. B. sechs l/min) gestattet, bei Auftreten höherer Entnahmegeschwindigkeiten jedoch die Entnahme automatisch unterbindet oder auf eine sehr geringe Entnahmegeschwindigkeit herabsetzt. Zweck dieses Sicherheitsventils - auch "Rohrbruchsicherung" genannt -
ist es, z. B. beim Platzen einer am Entnahmeventil
vorgesehenen Schlauchleitung oder beim unbeabsichtigten
Öffnen des Entnahmeventils, wenn an dieses keine Entnahmeleitung angeschlossen ist, das Austreten von
Treibgas zu verhindern oder auf einen bestimmten
kleinen Wert zu reduzieren.

Müssen an einem Fahrzeug, welches mit einem derartigen
Entnahmeventil an seinem Treibgastank ausgerüstet ist,
Reparaturen vorgenommen werden, so muß der Tank vorher
entleert werden. Da dies bei den bekannten Ventilen
nur über das erwähnte Sicherheitsventil möglich ist,
ist ein Entleeren in wirtschaftlich tragbarer Zeit
ausgeschlossen. Man hilft sich daher durch Leerblasen
des Vorratsbehälters oder Abfackeln des Treibgases.
Beide Maßnahmen sind jedoch gefährlich und können in
den meisten Werkstätten nur unter Umgehung einschlägiger
Sicherheitsbestimmungen ausgeführt werden.

Es ist Aufgabe der Erfindung, ein gattungsgemäßes
Entnahmeventil vorzuschlagen, welches trotz eingebautem Sicherheitsventil eine rasche Entleerung eines
mit dem Ventil ausgestatteten Vorratsbehälters ermöglicht.

- 3 -

Die Aufgabe wird erfindungsgemäß dadurch gelöst, daß
am Ventilgehäuse zusätzlich ein Entleerungsstutzen
angeordnet ist, der normalerweise durch ein zweites
bewegliches Ventilglied verschlossen ist, und daß das
zweite Ventilglied am Sicherheitsventil angreifende
Betätigungsmittel aufweist, die beim Bewegen des
zweiten Ventilgliedes in seine Offenstellung das
Sicherheitsventil außer Tätigkeit setzen, so daß
Treibgas mit hoher Entnahmegeschwindigkeit aus dem
Entleerungsstutzen austreten kann.

Die nachstehende Beschreibung bevorzugter Ausführungsformen der Erfindung dient im Zusammenhang mit beiliegender Zeichnung der weiteren Erläuterung. Es
zeigen:

Fig. 1    eine Längsschnittansicht eines Ent-
          nahmeventils für verflüssigte Treib-
          gase;

Fig. 2    eine Draufsicht des Entnahmeventils
          und

Fig. 3    das Entnahmeventil aus Fig. 1 mit
          aufgesetzter Entleerungsvorrichtung
          und ausgeschaltetem Sicherheits-
          ventil.

- 4 -

Das auf der Zeichnung dargestellte Entnahmeventil umfaßt ein Ventilgehäuse 1, welches mittels eines Gewindes 2 abgedichtet in eine entsprechende Öffnung
eines Vorratsbehälters, z. B. eines Kraftfahrzeugtanks, eingeschraubt werden kann. Am Ventilgehäuse 1
ist ein Entnahmestutzen 3 vorgesehen, an den eine zum
Kraftfahrzeugmotor führende Entnahmeleitung, z. B.
ein Rohr oder ein Schlauch, angeschlossen werden kann.
Eine Bohrung 4 des Stutzens 3 mündet mit einer Entnahmeöffnung 5 in das Ventilgehäuse 1 ein. Die Entnahmeöffnung 5 kann mittels einer Spindel 6, an welcher
ein Handrad 7 angeordnet ist, wahlweise verschlossen
oder geöffnet werden. Die Spindel 6 ist durch eine
O-Dichtung 8 abgedichtet. Im Schließzustand sitzt
eine weitere, an einer Stirnseite der Spindel 6 vorgesehene Dichtung 9 auf einem Ventilsitz 11 auf.

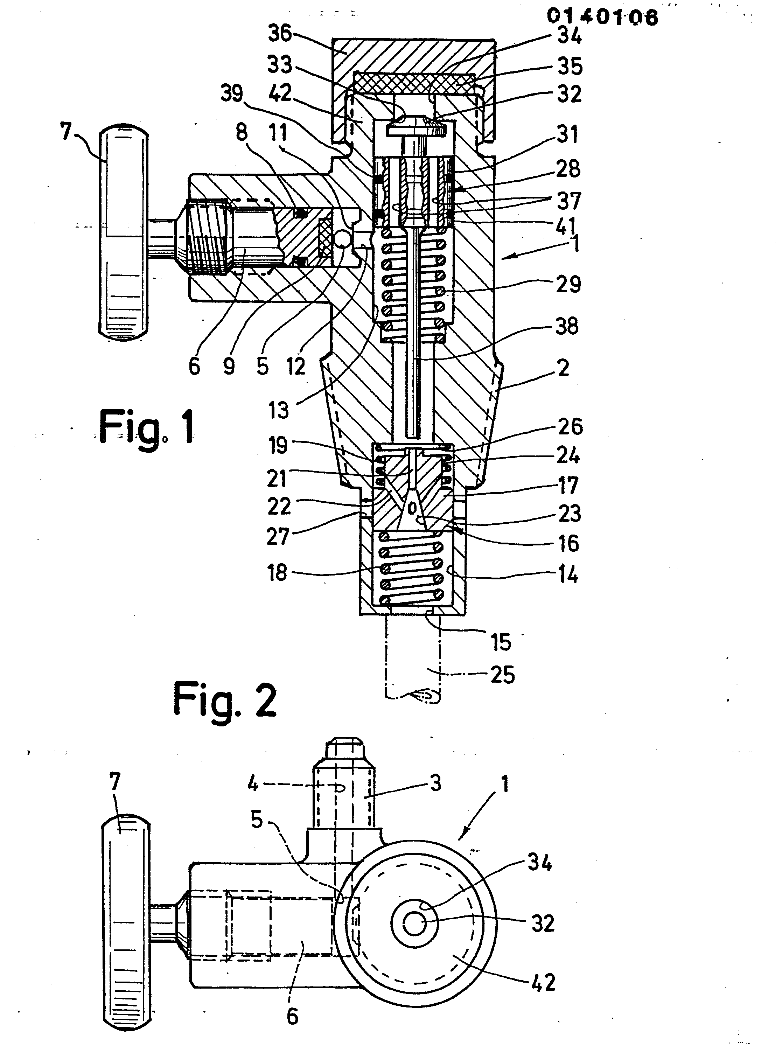

Vom Ventilsitz 11 geht eine radial im Gehäuse 1 verlaufende Bohrung 12 aus, die zu einem zentralen, mehrfach abgestuften Freiraum 13 im Innern des Gehäuses 1
hin verläuft. Die Bohrung 12 und der Freiraum 13
bilden Teile einer Entnahmeleitung, durch welche hindurch Treibgas aus dem Vorratsbehälter zur Entnahmeöffnung 5 strömen kann. In einem unteren, abgestuften
Bereich 14 des Freiraums 13, der nach unten hin über
eine Öffnung 15 zum (nicht dargestellten) Vorratsbehälter hin geöffnet ist, ist ein Sicherheitsventil 16
angeordnet. Das Sicherheitsventil 16 umfaßt einen im
Bereich 14 axial verschieblichen Ventilkörper 17, dessen eine (untere) Endlage durch eine Schraubenfeder 18 bestimmt ist, die sich normalerweise (Fig. 1)
in entspanntem Zustand befindet. An der der Feder 18
gegenüberliegenden Stirnseite des Ventilkörpers 17
greift eine weitere, schwächere Schraubenfeder 19 an,
die sich andererseits an einer Stufe des Ventilgehäuses 1 abstützt und den Ventilkörper 17 gegen die
Feder 18 drückt. Der Ventilkörper 17 weist eine zentral
und axial verlaufende, dünne Bohrung 21 auf, welche
an der der Feder 18 gegenüberliegenden Stirnseite des
Ventilkörpers 17 zum Freiraum 13 hin ausmündet. Weitere,
schräg verlaufende Bohrungen 22 des Ventilkörpers 17
führen, ausgehend von einer kegelförmigen Aussparung
23, zu einer abgestuften Mantelfläche 24 des Ventilkörpers 17 und stehen bei dem in Fig. 1 dargestellten,
normalen Betriebszustand ebenfalls mit dem zur Entnahmeöffnung 5 hin führenden Freiraum 13 in Verbindung.
In diesem Zustand kann Treibgas über ein an der Öffnung 15 vorgesehenes, in Fig. 1 strichpunktiert dargestelltes Tauchrohr 25 aus dem (nicht dargestellten)
Vorratsbehälter den Ventilkörper 17 des Sicherheitsventils 16 durchdringen und über den Freiraum 13 und
die Bohrung 12 zur Entnahmeöffnung 5 und von da zum
Motor gelangen.

Wird die Entnahmegeschwindigkeit an der Entnahmeöffnung 5 über einen bestimmten Wert (z. B. sechs l/min)
erhöht, so entsteht an der dem Freiraum 13 zugekehrten Stirnseite des Ventilkörpers 17 ein solcher Unterdruck, daß der an der gegenüberliegenden Stirnseite herrschende Treibgasdruck den Körper 17 gegen
die Wirkung der Feder 19 verschiebt und an die in
Fig. 1 mit 26 bezeichnete Schulter des Ventilgehäuses
anlegt. In dieser Position des Sicherheitsventils 16
kann aus den Kanälen 22 kein Treibgas mehr zum Freiraum 13 hin austreten. Das Treibgas kann vielmehr nur
noch in reduzierter Menge durch den zentralen Kanal 21
ausströmen. Erst dann, wenn das Treibgas wieder mit
zulässiger Geschwindigkeit aus der Entnahmeöffnung 5
austritt und sich hierdurch bestimmte Druckverhältnisse im Freiraum 13 ausgebildet haben, kehrt das
Sicherheitsventil in seine in Fig. 1 dargestellte
Normallage zurück.

Wie aus Fig. 1 weiterhin ersichtlich, sind am unteren,
das Sicherheitsventil 16 aufnehmenden Teil des Ventilgehäuses 1 radial verlaufende Bohrungen 27 vorgesehen,
die bei Normallage des Sicherheitsventils 16 von
diesem verschlossen sind.

Oberhalb des Sicherheitsventils 16 ist im Freiraum 13
axialverschieblich ein zweites Ventilglied 28 angeordnet, welches von einer Schraubenfeder 29 belastet
ist. Das zweite Ventilglied 28 umfaßt einen Kolben
31, mit dem einstückig von der oberen Stirnseite des
Kolbens abstehend ein kegelartiger Ventilkörper 32
verbunden ist. Dieser Ventilkörper 32 wird im Normalbetriebszustand von der Feder 29 abdichtend gegen

- 7 -

einen Ventilsitz 33 gepreßt, der an einer ins Freie
mündenden Öffnung 34 des Ventilgehäuses 1 vorgesehen
ist. Die Öffnung 34 ist weiterhin unter Zwischenschaltung einer Abdichtscheibe 35 von einer aufgeschraubten Abdichtkappe 36 überfangen. Im Kolben 31
des zweiten Ventilgliedes 28 sind axial von einer zur
anderen Stirnseite des Kolbens durchgehende Bohrungen
37 vorgesehen. Schließlich steht von der Unterseite
des Kolbens 31 zentral nach unten ein Betätigungsstift 38 frei ab, der im normalen Betriebszustand
kurz oberhalb des Sicherheitsventils 16 endet.

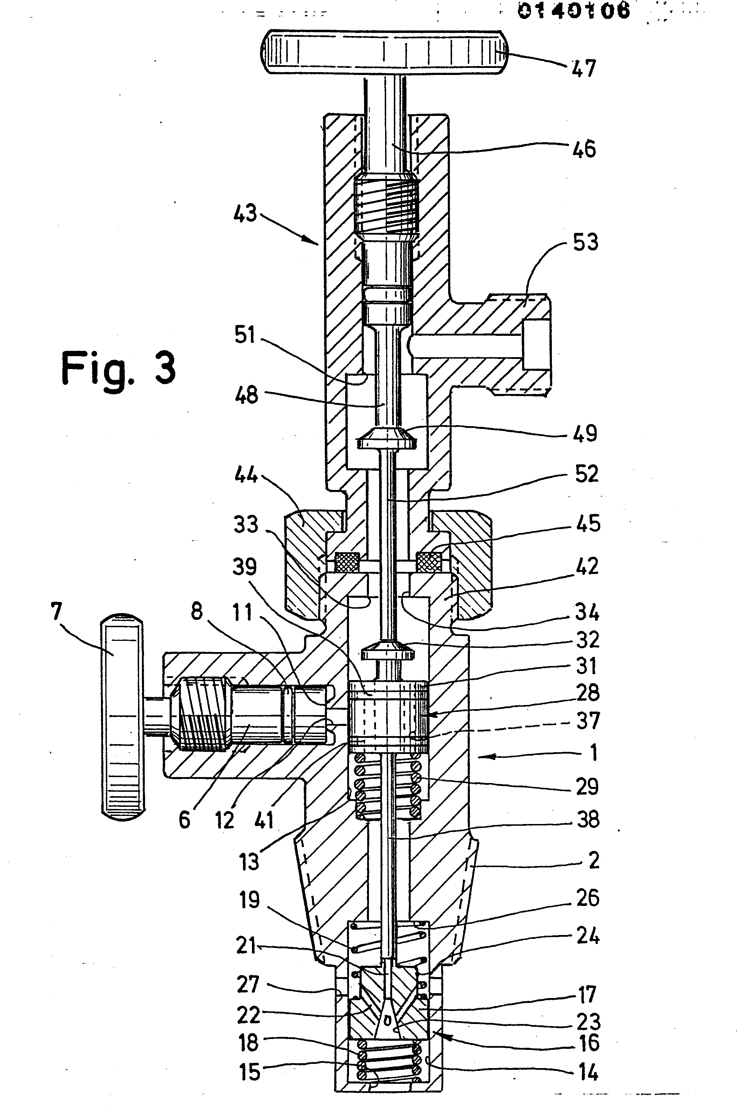

Wenn nach Abnahme der Schraubkappe 36 das zweite
Ventilglied 28 durch Einführen geeigneter Hilfsmittel
in die Öffnung 34 nach unten, d. h. in Richtung auf
das Sicherheitsventil 16 verschoben wird, greift der
Stift 38 an diesem Ventil an und schiebt dessen
Körper 17 in die in Fig. 3 dargestellte Lage. In
dieser Lage kann über die Bohrungen 27 Treibmittel
- vom Körper 17 des Sicherheitsventils 16 unbehindert -
in den Bereich 14 des Ventilgehäuses 1 und von da in
den Freiraum 13 gelangen, von wo es über die Kanäle
37 im zweiten Ventilglied 28 hindurch zur Öffnung 34
strömt. Auf diese Weise kann der Vorratsbehälter über
die Öffnung 34 entleert werden, und zwar unter Umgehung des Sicherheitsventils 16, d. h. mit erheblicher Entleerungsgeschwindigkeit.

- 8 -

Wie in Fig. 3 dargestellt, ist die Anordnung des
zweiten Ventilkörpers 28 so getroffen, daß im Zustand
rascher Entleerung des Vorratsbehälters die äußere
Mantelfläche des Kolbens 31 die Bohrung 12 und
damit die Entnahmeöffnung 5 zusätzlich abdichtet, so
daß auch bei geöffneter Ventilspindel 6 aus der Entnahmeöffnung 5 kein Treibgas austreten kann. U-Dichtungen 39, 41 dichten den Kolben 31 ab. Nach vollzogener Entleerung des Vorratsbehälters wird der
Ventilkörper 32 freigegeben, wodurch unter der Wirkung
der Federn 18 und 29 die in Fig. 1 dargestellte Normalstellung wieder erreicht wird.

Der die erwähnte Öffnung 34 umgebende, die Schraubkappe 36 tragende Teil des Ventilgehäuses 1 wird als
Entleerungsstutzen 42 bezeichnet. Zur Entleerung des
Vorratsbehälters in der beschriebenen Weise ist auf
den Stutzen 34 eine Entleerungsvorrichtung 43 aufsetzbar, z. B. mit Hilfe einer Überwurfmutter 44 oder auch
mit Hilfe einer an sich bekannten, gewindefreien
Schnell- oder Steckkupplung. Zwischen Entleerungsvorrichtung 43 und der oberen Stirnseite des Entleerungsstutzens 42 befindet sich eine Ringdichtung 45. Die
Entleerungsvorrichtung 43 enthält eine Betätigungsspindel 46 mit Handrad 47. Die Spindel 46 ist in ein
entsprechendes Innengewinde der Entleerungsvorrichgung 43 einschraubbar. An einem nach unten abstehenden
Fortsatz 48 der Spindel 46 ist ein kegelförmiger
Ventilkörper 49 fest angeordnet, der bei (in Fig. 3
nach oben) herausgedrehter Spindel 46 eine Öffnung 51

- 9 -

im Gehäuse der Vorrichtung 43 abdichtet und verschließt.
Vom Fortsatz 48 steht weiterhin ein stiftförmiges
Betätigungsorgan 52 ab. Wird nach dem Aufsetzen der
Vorrichtung 43 auf den Entleerungsstutzen 42 die
Spindel 46 (in Fig. 3 nach unten) eingedreht, so hebt
sich der Ventilkörper 49 von der Öffnung 51 ab. Gleichzeitig greift das freie Ende des Betätigungsorgans 52
am Ventilkörper 32 des zweiten Ventilgliedes 28 an
und verschiebt dieses in die in Fig. 3 dargestellte
Stellung, in welcher das Sicherheitsventil 16 in der
bereits beschriebenen Art und Weise außer Tätigkeit
gesetzt ist, so daß Treibgas mit hoher Entnahmegeschwindigkeit aus der Öffnung 34 des Entleerungsstutzens 42 aus- und in die Entleerungsvorrichtung
43 eintreten kann. Diese Vorrichtung hat einen seitlich abstehenden Anschlußstutzen 53, an den eine Entleerungspumpe angeschlossen werden kann. Somit kann
bei der in Fig. 3 dargestellten Stellung der Einzelteile Treibgas aus einem Vorratsbehälter mittels der
Entleerungsvorrichtung 43 leicht und rasch abgezogen
werden. Dabei ist natürlich wichtig, daß die erwähnten
Bohrungen 27 am unteren Teil des Ventilgehäuses 1
einen entsprechend größeren Querschnitt als die
Kanäle 21, 22 im Sicherheitsventil 16 haben. Nach
vollzogener Entleerung wird die Spindel 46 wieder so
weit herausgedreht, bis der Ventilkörper 49 die Öffnung 51 abdichtet und die Teile des Entnahmeventils
die in Fig. 1 dargestellte Stellung erreicht haben.
Danach wird die Entleerungsvorrichtung 43 vom Entleerungsstutzen abgenommen. Hierauf kann die als abdichtende Überwurfmutter dienende Schraubkappe 36
wieder am Entnahmeventil angebracht werden.

Bei der dargestellten Ausführungsform erfolgt das
Öffnen und Schließen des Entnahmeventils an der Entnahmeöffnung 5 mit Hilfe der Schraubspindel 6. Das
Öffnen und Verschließen der Entnahmeöffnung 5 kann in
an sich bekannter Weise auch durch elektromagnetisch,
pneumatisch oder hydraulisch betätigte Ventilglieder
erfolgen.

Der wesentliche Vorteil der Erfindung besteht darin,
daß dann, wenn das als Rohrbruchsicherung dienende
Sicherheitsventil 16 außer Tätigkeit gesetzt ist,
ein verhältnismäßig großer Entleerungsquerschnitt
freigegeben wird, über den eine rasche Entleerung
des Vorratsbehälters erfolgen kann. Gleichzeitig wird
dabei die Entnahmeöffnung 5 abgedichtet, so daß auch
bei unbeabsichtigtem Öffnen des Entnahmeventils kein
Gas aus diesem ausströmen kann.

Anmelder: Ninnelt GmbH und Co. KG
Withauweg 9
7000 Stuttgart 40

P a t e n t a n s p r ü c h e :

1. Entnahmeventil zur Entnahme verflüssigter Treibgase aus einem Vorratsbehälter mit einem Ventilgehäuse, einer an diesem Gehäuse vorgesehenen
Entnahmeöffnung, einer im Ventilgehäuse ausgebildeten, vom Vorratsbehälter zur Entnahmeöffnung
führenden Entnahmeleitung, einem ersten beweglichen
Ventilglied zum Öffnen und Verschließen der Entnahmeleitung und mit einem ebenfalls im Ventilgehäuse angeordneten Sicherheitsventil, welches
bei Überschreiten einer bestimmten Entnahmegeschwindigkeit des Treibgases die Entnahmeleitung
automatisch zumindest teilweise versperrt,
d a d u r c h  g e k e n n z e i c h n e t ,
daß am Ventilgehäuse (1) zusätzlich ein Entleerungsstutzen (42) angeordnet ist, der normalerweise
durch ein zweites, bewegliches Ventilglied (28)
verschlossen ist, und daß das zweite Ventilglied
am Sicherheitsventil (16) angreifende Betätigungsmittel (38) aufweist, die beim Bewegen des zweiten
Ventilgliedes in seine Offenstellung das Sicherheitsventil außer Tätigkeit setzen, so daß Treibgas
mit hoher Entnahmegeschwindigkeit aus dem Entleerungsstutzen austreten kann.

2. Ventil nach Anspruch 1, dadurch gekennzeichnet,
   daß der in seine Offenstellung verschobene, zweite
   Ventilkörper (28) gleichzeitig die Entnahmeöffnung
   (5) verschließt.

3. Ventil nach Anspruch 1 oder 2, dadurch gekennzeichnet, daß das zweite Ventilglied (28) einen
   mit axialen Durchgangsbohrungen (37) für Treibgas
   versehenen Kolben (31), dessen Mantelfläche dem
   Verschließen der Entnahmeöffnung (5) dient, sowie
   einen an einer Stirnseite des Kolbens angeordneten
   Ventilkörper (32) zum Verschließen des Entleerungsstutzens (42) umfaßt.

4. Ventil nach Anspruch 1, 2 oder 3, dadurch gekennzeichnet, daß das zweite Ventilglied (28) durch
   Federkraft (Feder 29) belastet ist, die das Ventilglied (28) am Entleerungsstutzen (42) in Schließstellung hält.

5. Ventil nach einem der Ansprüche 1 bis 4, dadurch
   gekennzeichnet, daß die Betätigungsmittel (38) des
   zweiten Ventilgliedes (28) als Betätigungsstift
   ausgebildet sind, der an einem verschieblich im
   Ventilgehäuse (1) angeordneten Körper (17) des
   Sicherheitsventils (16) angreift und diesen Körper
   beim Bewegen des zweiten Ventilgliedes in seine
   Offenstellung zwecks Freigabe wenigstens einer im
   Ventilgehäuse ausgebildeten Durchgangsbohrung (27)
   für Treibgas verschiebt.

- 3 -

6. Ventil nach einem der voranstehenden Ansprüche,
   dadurch gekennzeichnet, daß eine Entleerungsvorrichtung (43) vorgesehen ist, die beim Aufsetzen
   auf den Entleerungsstutzen (42) mittels eines
   Betätigungsorgans (52) das zweite Ventilglied (28)
   in seine Offenstellung verschiebt.

7. Ventil nach Anspruch 3, dadurch gekennzeichnet,
   daß der Kolben (31) durch O-Ringe (39,41) gegen
   die Entnahmeöffnung (5) abgedichtet ist.

8. Ventil nach Anspruch 6, dadurch gekennzeichnet,
   daß die Entleerungsvorrichtung (43) durch eine an
   sich bekannte Schnellkupplung mit dem Entleerungsstutzen (42) verbindbar ist.

0140106

Fig. 1

Fig. 2

Ninnelt GmbH und Co. KG. Withauweg 9, 7000 Stuttgart 40
HOEGER, STELLRECHT & PARTNER
Patentanwälte in Stuttgart

A 0 295 m

Fig. 3